# FASCICULE DE BREVET EUROPEEN

(11) **EP 2 990 263 B1**
(45) Date de publication et mention de la délivrance du brevet: **09.05.2018**
(21) Numéro de dépôt: 15182828.2
(22) Date de dépôt: 27.08.2015
(51) Int. Cl.: B60P 3/12, B60P 1/64

(54) **VEHICULE ROUTIER DE TRANSPORT AYANT UNE STRUCTURE DE SUPPORT DE CHARGEMENT A ACCROCHAGE ET DECROCHAGE AUTOMATIQUES**
STRASSENTRANSPORTFAHRZEUG MIT EINER HALTESTRUKTUR ZUM BELADEN MIT AUTOMATISCHEM EIN- UND AUSKLINKSYSTEM
ROAD TRANSPORT VEHICLE HAVING A LOAD-BEARING STRUCTURE WITH AUTOMATIC COUPLING AND UNCOUPLING

(30) Priorité: 28.08.2014 FR 1458093
(43) Date de publication de la demande: 02.03.2016
(73) Titulaire: Joubert, Patrick, 49000 Angers (FR)
(72) Inventeur: JOUBERT, Patrick, 49000 Angers (FR); GUIET, Claude, 49340 Trementines (FR)
(74) Mandataire: Cabinet Chaillot

(56) Documents cités:
- EP-A2- 0 449 217
- DE-U1- 9 015 174
- FR-A1- 2 908 103
- FR-A1- 3 000 925

## Description

La présente invention concerne les véhicules routiers de transport, à moteur ou non, et de type à châssis basculant ou non, tels que les camions, les remorques, les semi-remorques, ou analogue, ayant une structure de support de chargement qui permet un chargement et un déchargement au sol et qui est accrochable/décrochable du véhicule de manière automatique.

Le brevet français FR 2 908 103 décrit un exemple d'un tel véhicule permettant de faciliter le chargement et le déchargement d'un objet sur le véhicule.

Ce véhicule est une remorque du type basculante comprenant un châssis sur lequel est monté un timon articulé, un chariot monté à coulissement sur le châssis pour entraîner une structure de support de charge entre une position de chargement/déchargement de la charge où la structure de support de charge repose par une extrémité sur le sol, et une position de transport de la charge où la structure de support de charge repose sur le châssis de la remorque.

Afin que la structure de support de charge repose entièrement à plat sur le sol dans la position de chargement/déchargement, à savoir aussi bien par son extrémité libre que par son extrémité attelée au chariot, la structure de support de charge et le chariot sont reliés par une articulation double, à savoir une articulation comprenant deux axes d'articulation parallèles entre eux et écartés l'un de l'autre.

Cependant, la structure de l'ensemble chariot - articulation double - structure de support de charge selon le brevet FR 2 908 103 est complexe à mettre en oeuvre, notamment à fabriquer et à monter, est fragile et donc susceptible d'être aisément endommagée durant une opération de chargement/déchargement, notamment si la charge est de poids important.

De plus, la structure de support de charge n'est pas détachable du chariot.

Ainsi, il existe actuellement un besoin pour un véhicule ayant des moyens de chargement et de déchargement de structure simple et résistante tout en permettant de garantir que la structure de support de charge pourra être accrochée au véhicule et décrochée du véhicule de manière automatique et sûre, notamment du fait qu'elle arrivera à une position de pose au sol par ses deux régions d'extrémité tout en se décrochant du véhicule, position de pose au sol correspondant à la position de chargement/déchargement.

La présente invention vise à répondre à ce besoin et a pour objet un véhicule routier de transport comprenant un châssis ayant un axe longitudinal, un chariot monté à translation suivant l'axe longitudinal du châssis et ayant un côté avant et un côté arrière se trouvant côté respectivement avant et arrière du châssis, au moins un élément de guidage en translation du chariot et une structure de support de chargement reliée au chariot et ayant une région d'extrémité côté avant du véhicule et une région d'extrémité côté arrière du véhicule, le chariot étant déplaçable entre une première position, dite de transport, dans laquelle la structure de support de chargement est portée par le châssis, et une seconde position, dans laquelle la structure de support de chargement repose au sol par ses régions d'extrémité côté avant et côté arrière, le ou les éléments de guidage étant déplaçables entre une position sensiblement horizontale et au moins une position inclinée dans laquelle ils sont inclinés vers l'arrière du véhicule avec leur extrémité arrière au voisinage du sol, des moyens de commande du mouvement d'inclinaison du ou des éléments de guidage et des moyens de commande du mouvement de translation du chariot étant prévus, caractérisé par le fait que :
- la structure de support de chargement et le côté arrière du chariot sont reliés par au moins une articulation simple comprenant d'une part un axe porté par l'un du chariot et de la structure de support de chargement et, d'autre part, au moins un crochet porté par l'autre du chariot et de la structure de support de chargement, l'au moins un crochet ayant une ouverture dans laquelle ledit axe est reçu de manière amovible, l'ouverture de l'au moins un crochet offrant alors une surface de butée permettant de solidariser en translation le chariot et la structure de support de chargement pour qu'un mouvement de translation du chariot entraîne un mouvement de translation de la structure de support de chargement, et
- sont prévus des moyens pour, dans la région d'extrémité arrière du ou des éléments de guidage, incliner le côté arrière du chariot vers le bas par rapport à l'axe longitudinal moyen du ou de chaque élément de guidage, de façon à rapprocher du sol celui de l'axe et de l'au moins un crochet qui est porté par le chariot, suffisamment pour que l'ouverture de l'au moins un crochet n'offre plus de surface de butée pour solidariser en translation le chariot et la structure de support de chargement lorsque le chariot est placé dans la seconde position, dite de pose au sol.

Grâce aux moyens d'inclinaison du chariot vers le bas et à l'utilisation d'une ou plusieurs articulations simples formées chacune par un axe et au moins un crochet, la structure de support de chargement peut être amenée à reposer entièrement au sol simultanément au décrochage.

En effet, il suffira à l'utilisateur, après avoir placé le chariot dans la position de pose au sol, d'avancer le véhicule : étant donné que le ou les crochets n'offrent plus de surface de butée pour l'axe, le mouvement du chariot dû à l'avance du véhicule ne sera pas transmis à la structure de support de chargement et cette dernière restera donc immobile au sol.

De la même manière, pour raccrocher au véhicule la structure de support de chargement, il suffira à l'utilisateur de placer le chariot dans la position de pose au sol, puis de reculer le véhicule pour placer celui de l'axe et du ou des crochets porté par le chariot, sous l'autre de l'axe et du ou des crochets porté par la structure de support de chargement, et enfin de déplacer en translation le chariot vers l'avant du ou des éléments de guidage de façon à réaliser l'engagement entre l'axe et le ou les crochets pour solidarisation du chariot à la structure de support de chargement.

Dans un mode de réalisation particulier de la présente invention, le ou les éléments de guidage définissent la trajectoire suivie par le chariot entre la position de transport et la position de pose au sol et ils sont agencés pour que dans leur région d'extrémité arrière ladite trajectoire soit inclinée vers le bas par rapport à l'axe longitudinal moyen du ou des éléments de guidage, le ou les éléments de guidage formant ainsi les moyens pour incliner le chariot vers le bas.

De préférence, le ou chaque élément de guidage est un rail rectiligne dont la région d'extrémité arrière forme un angle avec la partie rectiligne du rail et constitue la partie dans laquelle la trajectoire du chariot est inclinée vers le bas par rapport à l'axe longitudinal moyen du rail, la partie rectiligne du rail étant parallèle audit axe longitudinal moyen.

Le véhicule peut comprendre deux éléments de guidage parallèles l'un à l'autre et guidant chacun en translation un côté latéral respectif du chariot.

Selon un premier mode de réalisation particulier, l'au moins un crochet de la ou de chaque articulation est porté par la structure de support de chargement, l'ouverture de l'au moins un crochet étant tournée vers le bas, et le chariot comprend un corps muni d'une part de moyens de roulement guidés en translation par le ou les éléments de guidage et, d'autre part, d'au moins une patte se projetant vers l'extérieur à partir du côté arrière du chariot, l'axe de la ou de chaque articulation reliant le chariot et la structure de support de chargement étant porté par au moins une patte précitée, de telle sorte que l'axe de l'articulation est à une distance du corps du chariot suffisante pour que dans la position de pose au sol l'axe soit au voisinage du sol et que la région d'extrémité côté avant de la structure de support de chargement repose au sol.

La présence de la ou des pattes permet à la région d'extrémité côté avant de la structure de support de chargement de venir en contact avec le sol, dans la position de pose au sol, sans risque d'endommager le chariot dont le côté arrière reste dans les limites du ou des éléments de guidage.

De préférence, le corps du chariot est muni de deux pattes en regard l'une de l'autre et entre lesquelles est monté l'axe de l'articulation.

Selon un second mode de réalisation de la présente invention, l'axe de la ou de chaque articulation est porté par la structure de support de chargement et le chariot comprend un corps muni d'une part de moyens de roulement guidés en translation par le ou les éléments de guidage et, d'autre part, de l'au moins un crochet de la ou de chaque articulation, l'ouverture de l'au moins un crochet étant tournée vers le haut et située à une distance du corps du chariot suffisante pour que dans la position de pose au sol l'ouverture de l'au moins un crochet soit au voisinage du sol et que la région d'extrémité côté avant de la structure de support de chargement repose au sol.

De préférence, l'axe de la ou de chaque articulation est un axe globalement en V, dont l'angle au sommet est, de préférence, d'environ 140°. Un tel axe permet un autocentrage du crochet lors de l'accrochage.

On souligne ici que le véhicule selon la présente invention peut être à moteur ou non et être ou non du type à châssis basculant.

Ainsi, le véhicule peut être une remorque de type basculante, le châssis étant ainsi déplaçable entre une position sensiblement horizontale et au moins une position inclinée, dans laquelle il est incliné vers l'arrière du véhicule avec sa région d'extrémité côté arrière du véhicule au moins au voisinage du sol, le ou les éléments de guidage étant solidaires du châssis de façon à être inclinés avec le châssis, des moyens de commande du mouvement d'inclinaison du châssis étant prévus, lesquels moyens de commande constituant les moyens de commande du mouvement d'inclinaison du ou des éléments de guidage.

Les moyens de commande du mouvement d'inclinaison du châssis et du ou des éléments de guidage peuvent comprendre un timon articulé au châssis, devant l'essieu de la remorque, et des moyens pour faire pivoter le châssis par rapport au timon, les moyens pour faire pivoter le châssis étant notamment formés par un vérin monté entre le timon et la région d'extrémité avant du châssis.

En variante, le véhicule peut être du type à châssis non basculant et peut comprendre un faux-châssis monté sur le châssis à translation et de manière inclinable de façon à pouvoir être déplacé entre une position, correspondant à ladite position de transport, dans laquelle il repose sur le châssis et au moins une position inclinée dans laquelle il est incliné vers l'arrière du véhicule, le ou les éléments de guidage étant formés par le faux-châssis ou solidaires du faux-châssis de façon à être inclinés avec le faux-châssis, des moyens de commande des mouvements de translation et d'inclinaison du faux-châssis étant prévus, lesquels moyens de commande constituant les moyens de commande du mouvement d'inclinaison du ou des éléments de guidage.

La présente invention n'est pas limitée à des moyens particuliers pour la commande du mouvement de translation du chariot.

On peut ainsi mentionner l'utilisation d'un ou plusieurs treuils, comme décrit dans le brevet FR 2 908 103, ou d'au moins une chaîne à maillons fixée au chariot et circulant suivant une trajectoire sans fin s'étendant entre l'avant et l'arrière du châssis, la ou les chaînes étant entraînées chacune en déplacement par un pignon engrenant la chaîne et solidaire d'un arbre dont la rotation est commandée par exemple par un moteur ou un treuil manuel.

La présente invention n'est en outre pas limitée à une structure de support de chargement particulière. Ainsi, la structure de support de chargement peut être un plateau, une structure porte-véhicule à une ou deux gouttières, une benne, etc.

Pour mieux illustrer l'objet de la présente invention, on va en décrire ci-après un mode de réalisation particulier avec référence au dessin annexé.

Sur ce dessin :
- les Figures 1 et 2 sont des vues respectivement de côté et de dessus d'un véhicule (remorque) selon un premier mode de réalisation particulier de la présente invention, en position de transport, la structure de support de chargement étant de type plateau, le plateau en tant que tel n'ayant pas été représenté ;
- la Figure 3 est une vue en coupe transversale selon III-III sur la Figure 1 ;
- la Figure 4 est une vue en coupe transversale selon IV-IV sur la Figure 1 ;
- les Figures 5, 6 et 7 sont des vues respectivement de côté, de face et de dessus du chariot selon le mode de réalisation particulier de la présente invention ;
- la Figure 8 est une vue de côté du véhicule en position de chargement/déchargement ;
- les Figures 8A, 8B et 8C sont des vues de côté de la région d'extrémité arrière du châssis et de la région d'extrémité côté avant de la structure de support de chargement, illustrant le chariot respectivement avant le début de son inclinaison, au début de son mouvement d'inclinaison et juste avant l'arrivée au sol et à la position de pose au sol ;
- la Figure 9 est une vue de côté d'un autre véhicule (camion) selon le premier mode de réalisation particulier de la présente invention, lors d'une opération de bennage ;
- la Figure 10 est une vue de côté du camion avec le faux-châssis en position reculée, dans la seconde position de blocage ;
- la Figure 11 est une vue de côté du camion avec le faux-châssis en position inclinée en vue d'une opération de chargement ;
- la Figure 12 est une vue de côté du camion avec le plateau simultanément au sol et décroché du camion ;
- les Figures 13A et 13C sont des vues analogues aux Figures 8A et 8B, la Figure 13C étant une vue montrant le chariot qui est désengagé du plateau ;
- les Figures 14 et 15 sont des vues en perspective, respectivement côté extérieur et côté intérieur, de la région d'un longeron du faux-châssis dans laquelle se situent deux trous de blocage et la rainure ; et
- les Figures 16A à 16C sont des vues de côté de la région d'extrémité arrière du châssis et de la région d'extrémité côté avant de la structure de support de chargement d'un véhicule (remorque) selon un second mode de réalisation particulier de la présente invention, illustrant le chariot respectivement dans la position de pose au sol, au moment de l'accrochage et au début du soulèvement de la structure de support de chargement.

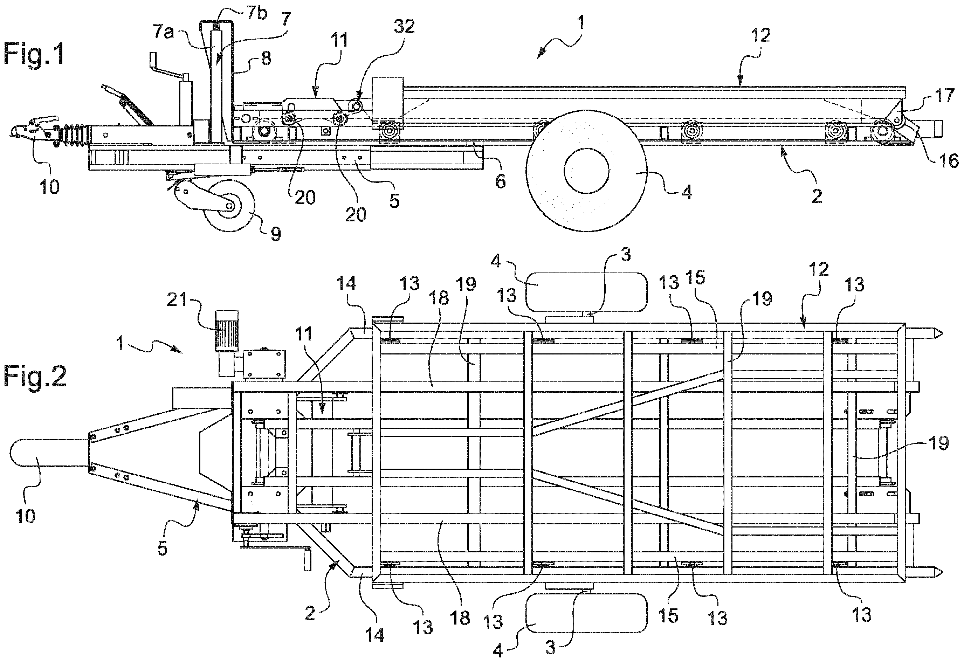

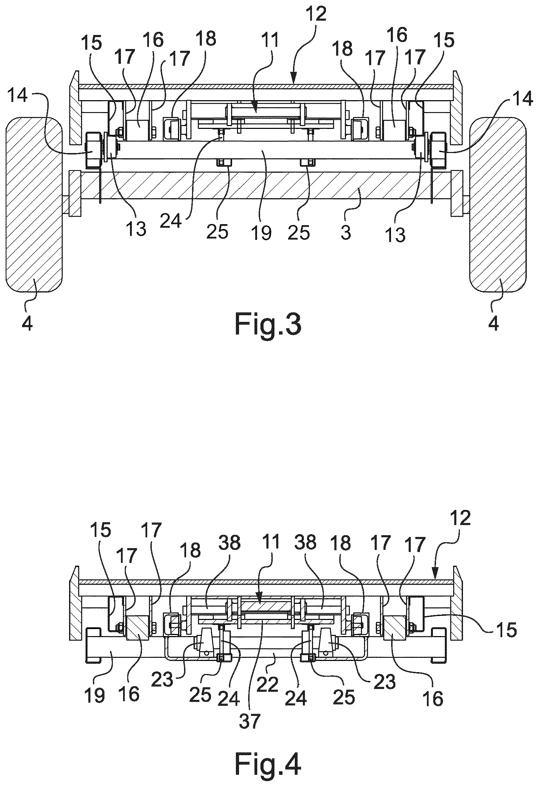

Si l'on se réfère aux Figures 1 à 8, on peut voir que le véhicule routier de transport selon un premier mode de réalisation particulier de la présente invention peut être une remorque de type basculante 1.

Dans ce qui suit, les termes « avant » et « arrière » correspondent respectivement à l'avant et à l'arrière du véhicule, dans la direction longitudinale de ce dernier.

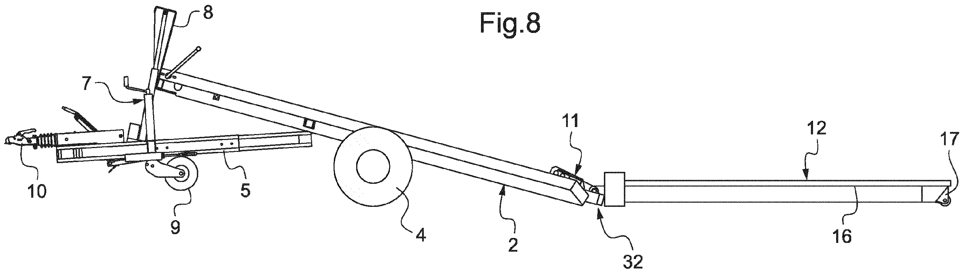

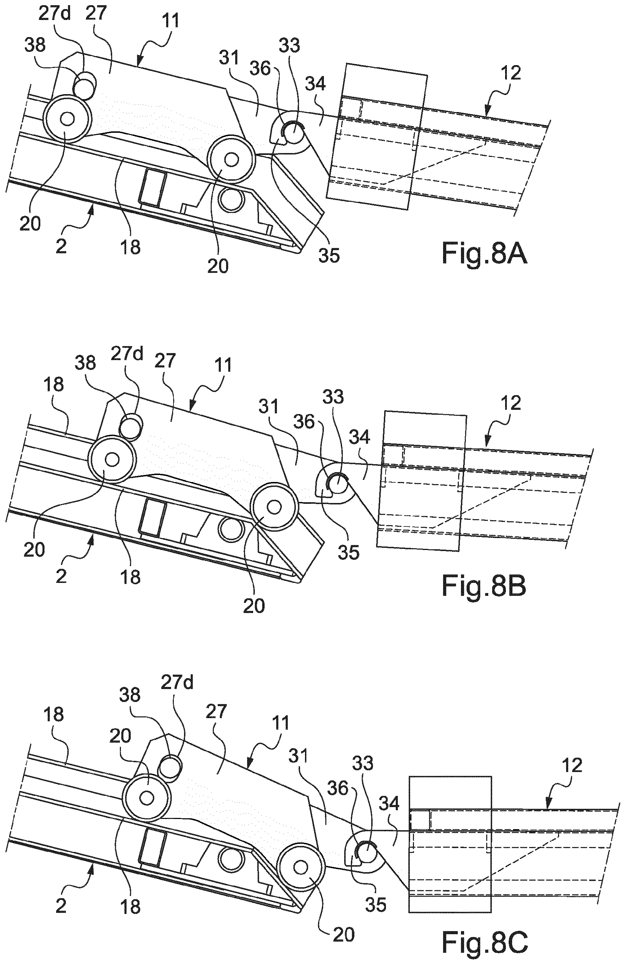

Comme on peut le voir, la remorque 1 comprend un châssis 2 de structure mécanosoudée de longerons et de traverses s'étendant globalement dans un plan. L'axe longitudinal du châssis 2 peut être défini comme l'axe appartenant audit plan et globalement parallèle à la direction longitudinale de la remorque 1. Le châssis 2 est monté sur un essieu 3 portant deux roues 4 et il peut basculer vers l'arrière sous l'action de moyens de commande formés d'une part par un timon articulé 5, articulé au châssis 2, devant l'essieu 3, par une articulation 6 d'axe horizontal et perpendiculaire à l'axe longitudinal de l'essieu 2, comme on peut mieux le voir sur la Figure 8, et d'autre part par un vérin linéaire 7 dont le corps 7a est articulé au timon 5, devant le châssis 2, et dont on a rendu la tête 7b solidaire du châssis 2 en l'articulation à un retour d'équerre d'une plaque verticale 8 solidaire du châssis 2, à l'avant de ce dernier.

Le châssis 2 est ainsi déplaçable entre une position de transport, représentée sur la Figure 1 et dans laquelle le châssis 2 est globalement horizontal et le timon 5 est en appui sur le sol par l'intermédiaire d'une petite roue 9, et une position de chargement/déchargement de charge, représentée à la Figure 8 et dans laquelle le châssis 2 a été incliné vers l'arrière, de telle sorte que son extrémité arrière est au voisinage du sol.

Le châssis 2 est déplacé de la position de transport vers la position de chargement/déchargement, et inversement, par respectivement l'extension et la rétraction de la tête 7b du vérin 7, faisant pivoter le châssis 2 vers l'arrière de la remorque 1 et par rapport au timon 5 autour de l'articulation 6, le timon 5 étant muni à son extrémité avant d'une attache remorque 10.

La remorque 1 comprend également des moyens de chargement et de déchargement de charge formés par un chariot 11 et une structure de support de chargement 12, à savoir un plateau 12 dans le mode de réalisation représenté.

Le chariot 11 et le plateau 12 sont montés coulissants sur le châssis 2 et le principe de fonctionnement est analogue à celui du brevet FR 2 908 103.

En particulier, le plateau 12 est porté à coulissement par des galets 13 montés rotatifs et répartis de manière régulière sur l'intérieur de deux longerons 14 du châssis 2, le plateau 12 portant sur sa face inférieure deux longerons 15 prenant appui sur les galets 13. Par ailleurs, dans la région d'extrémité côté arrière du plateau 12 sont disposées deux roulettes 16 portées chacune par des chapes 17, de sorte ladite région d'extrémité côté arrière roule sur le sol lors du mouvement du plateau 12 vers ou à partir de la position de chargement/déchargement.

Le chariot 11 est également monté coulissant sur le châssis 2 par deux éléments de guidage se présentant sous la forme de deux rails 18 de section transversale en U, parallèles l'un à l'autre avec leur ouverture tournée l'une vers l'autre et solidaires de traverses, désignées de manière générale par le chiffre de référence 19, du châssis 2, des roues 20 du chariot 11 étant montées dans les rails 18 et guidées en translation par ces derniers.

Si l'on se réfère à la Figure 8 et aux Figures 8A, 8B et 8C, on peut voir que les rails 18 sont rectilignes sur leur majeure partie, laquelle est disposée de façon à s'étendre selon une direction parallèle à l'axe longitudinal du châssis 2, et que leur région d'extrémité arrière est inclinée vers le bas de telle sorte que la trajectoire suivie par les roues 20 du chariot 11, et donc celle du chariot 11, est parallèle à l'axe longitudinal du chariot 11 dans la partie rectiligne des rails 18 et inclinée vers le bas par rapport audit axe longitudinal dans la région d'extrémité arrière du châssis 2. En d'autres termes, la région d'extrémité arrière de chaque rail 18 forme un angle avec la partie rectiligne du rail correspondant 18.

Le côté arrière du chariot 11 est relié à la région d'extrémité avant du plateau 12 par une articulation simple désignée de manière générale en 32, de telle sorte que le déplacement en translation du chariot 11 le long du châssis 2, dans la direction longitudinale du châssis 2, entraîne le déplacement du plateau 12 entre la position de transport et la position de pose au sol.

La commande du mouvement de translation du chariot 11 est assurée au moyen d'un moteur 21, fixé à l'avant du châssis 2, lequel moteur 21 entraîne en rotation un arbre 22 s'étendant transversalement au châssis 2 et porté à rotation par deux paliers 23 fixés au châssis 2. L'arbre 22 porte, entre les deux paliers 23, deux pignons 24 solidaires de l'arbre 22 et engrenant chacun une chaîne à maillons 25 fixée à une traverse 37 portant à chaque extrémité un axe 38 s'étendant chacun à travers une lumière oblongue respective 27d du chariot 11, comme cela sera décrit ci-après. Ainsi, la rotation de l'arbre 22 dans l'un ou l'autre sens de rotation, commandée par le moteur 21, entraîne, par l'intermédiaire des pignons 24, une rotation des chaînes 25 et donc, par l'intermédiaire des axes 38, un déplacement en translation du chariot 11, et de ce fait également du plateau 12, par rapport au châssis 2.

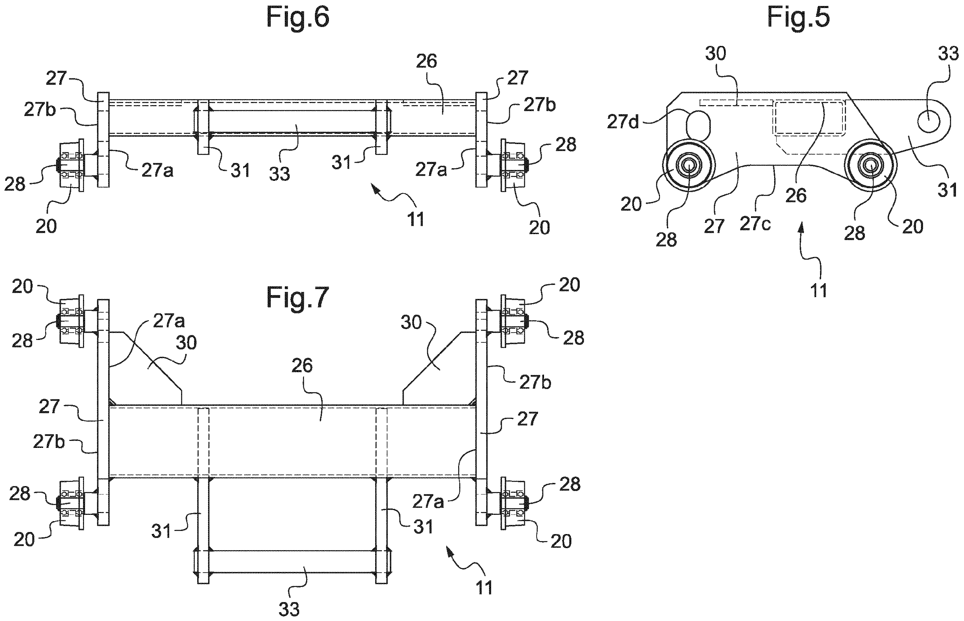

Si l'on se réfère plus particulièrement aux Figures 5 à 7, on peut voir que le chariot 11 est une structure mécanosoudée symétrique par rapport à la direction longitudinale de la remorque 1, dans la position d'utilisation, et qui comprend une traverse 26, de section rectangulaire, portant à chaque extrémité une plaque latérale 27 s'étendant dans un plan perpendiculaire à la direction longitudinale de la traverse 26. Chaque plaque latérale 27 a une face interne 27a et une face externe 27b à partir de laquelle s'étendent deux axes 28 sur chacun desquels est montée à rotation une roue 20, avec une roue 20 à chaque extrémité, dans la direction longitudinale, de la plaque latérale 27 respective.

Chaque plaque latérale 27 présente un bord inférieur 27c présentant une zone centrale en retrait, entre les deux roues 20, de façon à permettre le passage du chariot 12 de la partie rectiligne des rails 18 à leur région d'extrémité arrière de ceux-ci inclinée vers le bas, avec les roues avant 20 dans la partie rectiligne des rails 20 et les roues arrière 20 dans la partie inclinée vers le bas, comme représenté sur la Figure 8C.

Chaque plaque latérale 27 présente en outre une lumière oblongue 27d s'étendant verticalement dans la région avant de la plaque latérale 27, au-dessus de la roue 20 avant, et dans laquelle s'étend un axe 38.

La liaison entre la traverse 26 et les plaques latérales 27 est renforcée par des plaques de renfort 30 disposées de manière oblique entre le bord avant de la traverse 26 et la face interne 27a de chaque plaque latérale 27.

Le chariot 11 est en outre muni de deux pattes 31 en regard l'une de l'autre, fixées à la traverse 26 et se projetant vers l'arrière à partir de cette dernière, sur une distance telle que leur extrémité libre opposée à la traverse 26 se situe au-delà des plaques latérales 27 et donc des axes 28 des roues arrière 20 du chariot 11. La distance entre les pattes 31 est sensiblement égale à la moitié de la longueur de la traverse 26.

L'axe 33 de l'articulation 32, qui est ici formé par un rond droit, est monté entre les pattes 31, dans la région d'extrémité libre de ces dernières, l'axe 33 s'étendant horizontalement et perpendiculairement aux pattes 31.

L'articulation 32 comprend également deux éléments formant crochet 34, se présentant chacun sous la forme d'une plaque solidaire du plateau 12, sous la surface supérieure de ce dernier. Chaque plaque fait saillie de la région d'extrémité côté avant du plateau 12 et s'effile en direction de son extrémité libre, laquelle s'achève en un retour 35 vers le bas, en formant un creux circulaire 36 recevant de manière amovible l'axe 33. Ainsi, l'axe 33 est prisonnier dans le creux 36 de façon à permettre de transmettre au plateau 12 un mouvement de translation du chariot 11 tout en autorisant un mouvement de pivotement relatif entre le chariot 11 et le plateau 12, autour de l'axe 33. En d'autres termes, le chariot 11 et le plateau 12 sont solidarisés en translation lorsque l'axe 33 est accroché aux crochets 34.

On va maintenant décrire le fonctionnement de la remorque 1, avec référence aux Figures 1, 8, 8A, 8B et 8C.

Si l'on se réfère tout d'abord à la Figure 1, on peut voir que l'on y a représenté la remorque 1 dans la position de transport, dans laquelle la remorque 1 peut rouler avec ou sans chargement.

Dans cette position, le châssis 2 est sensiblement horizontal et repose en partie sur le timon 5. Le chariot 11 est disposé à l'avant du châssis 2 et repose également à l'horizontale sur celui-ci. Le plateau 12 est également porté à l'horizontale par le châssis 2, entre le côté arrière du chariot 11 et l'extrémité arrière du châssis 2.

Si l'on se réfère maintenant aux Figures 8, 8A, 8B et 8C, on peut voir que l'on y a représenté la remorque 1 dans la position de pose au sol.

Pour arriver à cette position, à partir de la position de transport, on incline tout d'abord le châssis 2 vers l'arrière, à l'aide du vérin 7 et du timon articulé 5. Une fois que le châssis 2 est dans cette position inclinée avec son extrémité arrière au voisinage ou au contact du sol, on commande le moteur 21 pour faire coulisser le chariot 11 vers l'arrière du châssis 2, ce qui déplace également le plateau 12, jusqu'à ce que le plateau 12 vienne reposer à plat sur le sol, sur lequel roulent les roulettes 16.

Comme on peut le voir sur les Figures 8A à 8C, dans la région d'extrémité arrière du châssis 2, le chariot 11 est guidé dans les rails 18 coudés vers le bas, de telle sorte qu'il s'incline progressivement vers le sol, par rapport à l'axe longitudinal du châssis 2. Ainsi, à mesure que les roues arrière 20 du chariot 11 s'approchent du sol, la région d'extrémité côté avant du plateau 12, articulée au chariot 11, est également rapprochée du sol. En particulier, on peut voir que cette inclinaison est autorisée par le fait que les lumières 27d sont oblongues et permettent ainsi un déplacement relatif des axes 38 dans chaque lumière 27d.

La Figure 8C illustre le chariot 11 juste avant l'arrivée à la position de décrochage automatique, c'est-à-dire juste avant que le plateau 12 ne repose sur le sol sur toute sa longueur, par ses deux régions d'extrémité.

Le chariot 11 continue de coulisser vers l'arrière du châssis 2 et il est encore incliné jusqu'à ce que, simultanément, le plateau 12 repose sur le sol également par sa région d'extrémité avant et l'axe 33 est désengagé des crochets 34. Le véhicule 1 peut alors être avancé, le plateau 12 ne sera pas déplacé par l'axe 33 et il restera immobile au sol.

Une fois le chargement placé sur le plateau 12 et arrimé à celui-ci, on ramène le véhicule 1 dans une position telle que l'axe 33 se situe en regard de l'ouverture des crochets 34, puis on actionne le moteur 21 pour ramener le plateau 12 vers sa position portée par le châssis 2, en faisant coulisser le chariot 11 vers l'avant du châssis 2, l'axe 33 venant alors s'engager dans les crochets 34 pour solidariser en translation le plateau 12 au chariot 11, puis on fait basculer le châssis 2 vers l'avant à l'aide du vérin 7 et du timon articulé 5.

Comme indiqué ci-dessus, le véhicule selon la présente invention peut être à moteur ou non et être ou non du type à châssis basculant.

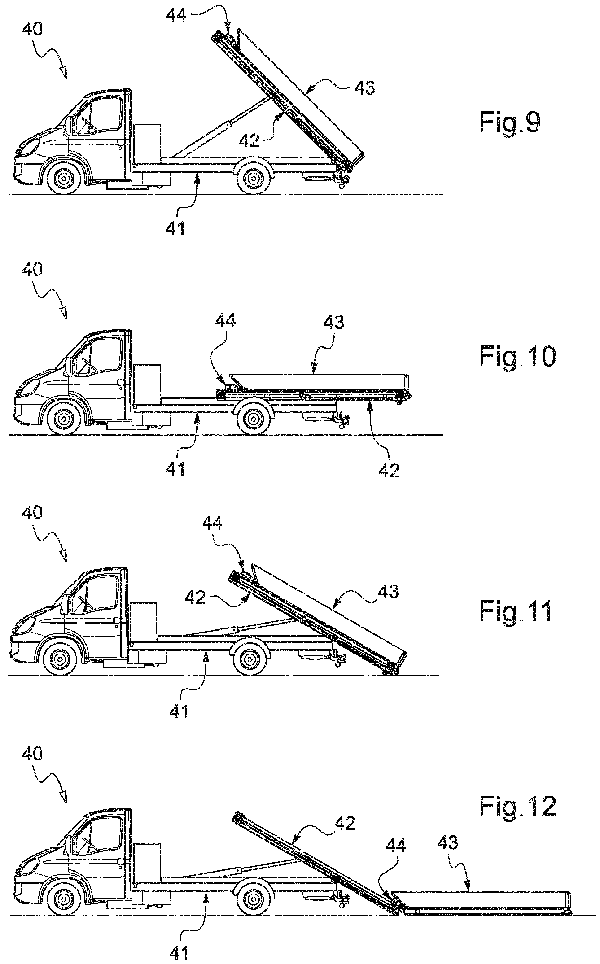

Si l'on se réfère maintenant aux Figures 9 à 12, on peut voir que l'on y a représenté un camion 40 selon le premier mode de réalisation de la présente invention.

Le camion 40 est un camion plateau classique dont le châssis 41 est non basculant et qui est équipé d'un faux-châssis 42 sur lequel est monté coulissant un plateau de chargement/déchargement 43, de type bac, dont le coulissement est commandé par un chariot 44 de manière analogue à celle décrite ci-dessus.

Le principe d'accrochage/décrochage automatique du plateau 43 est identique à celui décrit ci-dessus. Le camion 40 est cependant agencé de façon à pouvoir, au choix, permettre un bennage ou un décrochage au sol du plateau 43, comme cela va être décrit ci-dessous.

Le faux-châssis 42 comprend de manière classique deux longerons 45 parallèles reliés à chaque extrémité avant par une traverse avant, par une traverse intermédiaire à une distance de la traverse avant d'approximativement le tiers de la longueur du faux-châssis 42, et par deux traverses arrière.

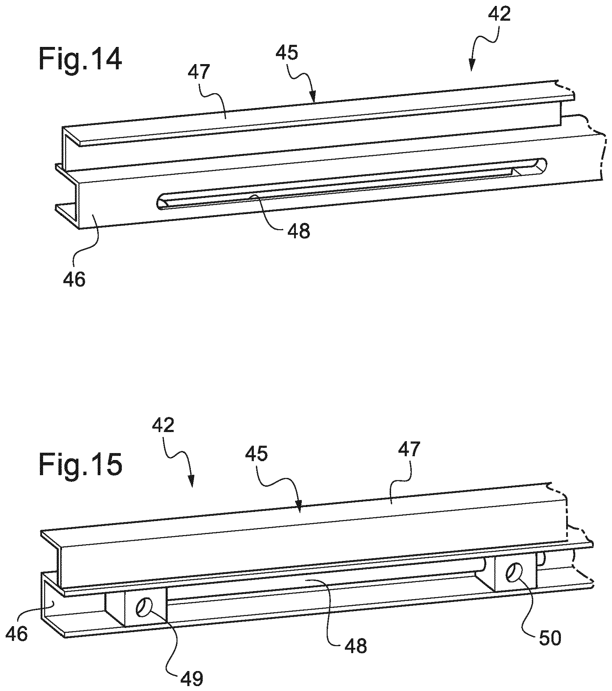

Comme on peut mieux le voir sur les Figures 14 et 15, chaque longeron 45 est formé par une poutre 46 creuse de support et une cornière 47 fixée sur la surface supérieure de la poutre 46, avec l'ouverture de la cornière 47 tournée vers l'extérieur, de façon à former avec la surface supérieure de la poutre 46 un chemin de roulement pour le chariot 44, à la manière des rails 18 pour la remorque de type basculante 1. En d'autres termes, les longerons 45 forment des rails pour la translation du chariot 44.

Une rainure longitudinale 48 est pratiquée dans la face latérale verticale de la poutre 46, côté opposé à celui tourné vers la ligne longitudinale moyenne du faux-châssis 42. La rainure 48 s'étend entre un premier trou 49 et un second trou 50 qui sont traversants et cylindriques, dont le rôle sera explicité ci-après. Les deux premiers trous 49 s'étendent selon un même premier axe et les deux seconds trous 50 s'étendent selon un même second axe, lesdits premier et second axes étant horizontaux et perpendiculaires à la direction longitudinale du faux-châssis 42.

Le faux-châssis 42 est porté par deux longerons du châssis 41, par l'intermédiaire d'une pluralité de galets montés libres en rotation sur des axes qui sont fixés aux longerons et s'étendent perpendiculairement à ces derniers, sur le côté intérieur du châssis 41.

Le faux-châssis 42 peut ainsi être animé d'un mouvement de translation vis-à-vis du châssis 41.

Le chariot 44, analogue au chariot 11, est monté coulissant sur le faux-châssis 41 de la manière que pour le châssis 2 et il est relié au plateau 43 est animé d'un mouvement de translation de la même manière que pour la remorque 1.

On va maintenant décrire brièvement les moyens permettant un mouvement d'inclinaison, plus précisément de pivotement, du faux-châssis 42 par rapport au châssis 41.

Un vérin est disposé sur l'extérieur et à l'extrémité arrière de chaque longeron en étant porté par un support fixé au longeron. Les vérins sont orientés de telle sorte que l'axe de leur tige est horizontal et perpendiculaire à la direction longitudinale du châssis 41, et les vérins sont également disposés de telle sorte que l'axe de leur tige s'étend dans le même plan que les axes des premiers et seconds trous 49 et 50.

Par conséquent, la tige de chaque vérin, en position étendue, peut s'étendre à l'intérieur de l'un des premier et second trous 49, 50 du longeron 46 respectif, lorsque l'axe dudit trou 49, 50 est aligné avec l'axe de la tige. Dans la position rentrée, la tige est dégagée du trou 49, 50 et ne forme donc pas une butée en translation pour le faux-châssis 42, tandis que dans la position étendue, la tige forme à la fois une butée en translation et un axe autour duquel le faux-châssis 42 peut pivoter.

Ainsi, lorsque l'on souhaite bloquer en translation le faux-châssis 42, les deux vérins sont actionnés pour étendre leur tige à travers les trous 49, 50 respectifs, après quoi le faux-châssis 42 peut, si on le souhaite, pivoter autour de l'axe de pivotement commun sur lequel sont alignées les deux tiges.

Comme on peut mieux le voir sur les Figures 9 à 12, le pivotement du faux-châssis 42 est commandé par l'actionnement d'un vérin dont la tête de la tige est fixée sur un arbre monté à rotation entre les deux longerons 45 du faux-châssis 42, dans la région médiane de ce dernier, et dont le corps est fixé à pivotement à la traverse intermédiaire du faux-châssis 42. Ainsi, lorsque les deux tiges des vérins s'étendent à travers soit les deux premiers trous 49, soit les deux seconds trous 50, l'extension et la rétraction de la tige du vérin fait pivoter le faux-châssis 42 respectivement vers l'arrière et vers l'avant du camion 40.

Par ailleurs, le mouvement de translation du faux-châssis 42 est également commandé par le vérin. En effet, lorsque l'on souhaite faire coulisser le faux-châssis 42, sans qu'il ne pivote simultanément, on actionne les vérins pour que l'extrémité libre de leur tige vienne se placer dans la rainure 48 du longeron 45 correspondant, ce qui permet à la fois de guider le mouvement de translation et d'empêcher le pivotement du faux-châssis 42.

Ainsi, comme on peut le voir sur la Figure 9, on peut réaliser une opération de bennage, les tiges des vérins s'étendant à travers les premiers trous 49 et la tige du vérin étant étendue de façon à faire pivoter le faux-châssis 42 vers l'arrière.

On va maintenant décrire la manière dont on peut décrocher automatiquement le plateau 43 du camion 40, avec référence aux Figures 10 à 12.

Tout d'abord, à partir de la position de transport, on place le faux-châssis 42 dans une position reculée, comme représenté sur la Figure 10, en dégageant les tiges des vérins des premiers trous 49, puis en commandant l'extension du vérin sur une petite distance de façon à faire coulisser le faux-châssis 42 vers l'arrière sur une petite distance correspondante, puis on commande l'extension des tiges des vérins pour que leur extrémité libre vienne se placer dans la rainure 48 correspondante. On commande ensuite à nouveau l'extension du vérin ce qui fait coulisser le faux-châssis 42 vers l'arrière, jusqu'à ce que les tiges des vérins viennent en butée contre les extrémités avant des rainures 48, puis l'on commande la rétraction des tiges, l'extension du vérin sur une petite distance pour amener les deux seconds trous 50 en regard des vérins, et enfin l'extension des tiges desdits vérins pour qu'elles s'étendent à travers les deux seconds trous 50.

Le faux-châssis 42 est alors bloqué en translation dans cette seconde position de blocage, et les tiges des vérins peuvent à nouveau servir d'axe de pivotement du faux-châssis 42 sous l'action du vérin comme représenté sur la Figure 11.

Une fois que le faux-châssis 42 est dans cette position inclinée avec son extrémité arrière à proximité ou au contact du sol, on peut faire coulisser le chariot 44 et donc le plateau 43 vers l'arrière, jusqu'à le plateau 4 vienne quasiment reposer sur le sol, comme représenté sur la Figure 12.

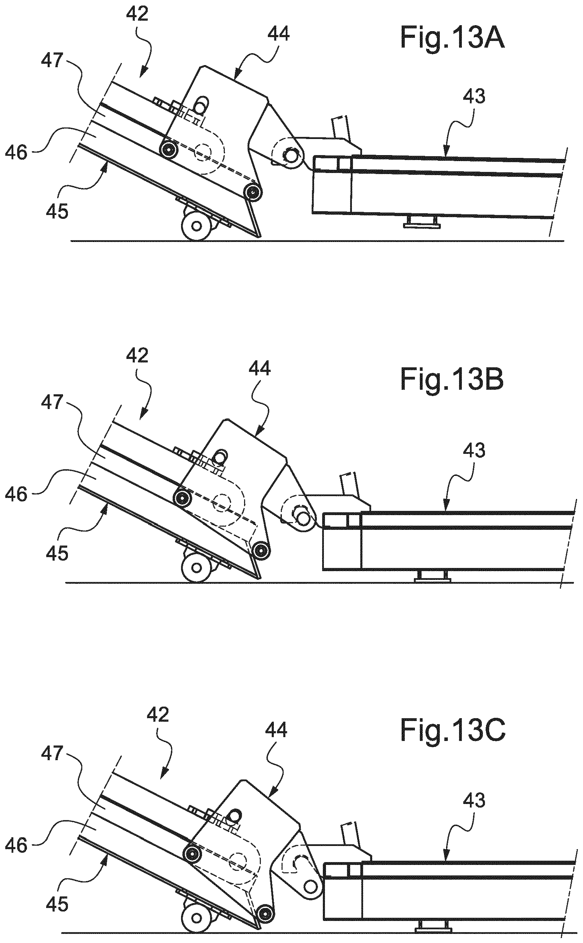

Si l'on se réfère aux Figures 13A à 13C, on peut voir que le principe de décrochage automatique st identique à celui décrit avec référence aux Figures 8A à 8C. En particulier, les longerons 45 du faux-châssis 41 sont configurés à leur extrémité arrière de la même manière que les rails 18, pour obtenir une inclinaison du chariot 44.

On pourra cependant mieux voir sur la Figure 13C que l'axe de l'articulation est désengagé des crochets solidaires du plateau.

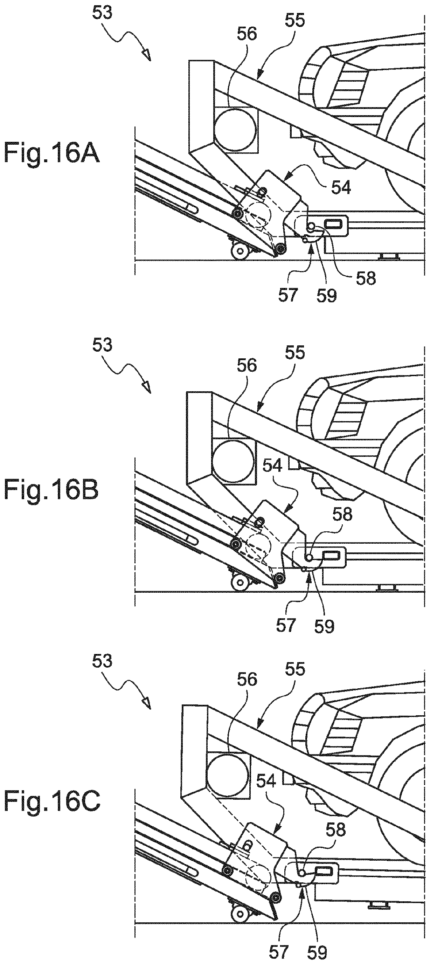

Si l'on se réfère maintenant aux Figures 16A à 16C, on peut voir que l'on a représenté, par des vues analogues aux vues 8A à 8C, différentes phases de l'accrochage d'une structure de support de chargement 55 reliée à une remorque 53 (identique à la remorque 1) par un chariot 54 selon un second mode de réalisation particulier de la présente invention.

La structure de support de chargement 55 est ici un porte-voiture classique avec treuil 56. Bien entendu, ce second mode de réalisation n'est pas limité à une structure de support de chargement particulière.

Ce second mode de réalisation particulier diffère du premier mode uniquement en ce que le chariot 54 et la structure 55 sont reliés par au moins une articulation simple 57 dont l'axe 58 est porté par la structure 55, à l'extrémité avant de cette dernière, et dont les crochets 59 sont portés par le chariot 54.

Le fonctionnement repose sur le même principe que celui décrit ci-dessus, à savoir que les crochets 59 sont agencés à une distance suffisante du corps du chariot 54, pour que, lorsque le chariot 54 est dans la position de pose au sol, ils n'offrent plus de surface de butée pour l'axe 58 de telle sorte que le chariot 54 et la structure 55 ne sont plus solidaires en translation, comme on peut le voir sur la Figure 16A qui montre bien que l'axe 58 est désengagé des crochets 59. Sur cette Figure, la structure 55 repose entièrement au sol et n'est pas accrochée au chariot 54.

Si l'on se réfère maintenant à la Figure 16B, on peut voir que l'on y a représenté le chariot 54 après qu'il a été légèrement déplacé en translation vers l'avant du châssis de la remorque 53, sur une distance permettant juste aux crochets 59 de venir au contact de l'axe 58.

La structure 55 repose encore au sol, mais la surface de l'ouverture des crochets 59 qui se trouve à droite de l'axe 58 si l'on regarde la Figure 16B (côté arrière de la structure 55), n'est pas suffisante pour constituer une surface de butée pour une translation vers l'avant de la remorque 53. En d'autres termes, si la remorque 53 avance alors que le chariot 54 se trouve dans cette position, la structure 55 ne sera pas déplacée et restera sur place.

Comme on peut le voir sur la Figure 16C, pour solidariser en translation la structure 55 au chariot 54, il suffit de déplacer ce dernier en translation vers l'avant de la remorque 53, ce qui fera remonter les crochets 59 avec un pivotement vers le haut par rapport à l'axe 58, de sorte que la surface de l'ouverture des crochets 59 à droite de l'axe 58 augmentera jusqu'à devenir suffisante pour former une surface de butée permettant de solidariser en translation le chariot 54 et la structure 55 dans le sens allant vers l'avant de la remorque 53.

Dans les premier et second modes de réalisation, les crochets sont à simple bec, le fond du bec étant creusé pour suivre un arc de cylindre. Pour un axe d'articulation d'un diamètre de 30 mm, on peut mentionner un fond de bec suivant un arc de cercle sous-tendant un angle de 45°.

Il est bien entendu que les modes de réalisation particuliers qui viennent d'être décrits ont été donnés à titre indicatif et non limitatif et que des modifications peuvent être apportées.

## Revendications

1. Véhicule routier de transport (1 ; 40) comprenant un châssis (2 ; 41) ayant un axe longitudinal, un chariot (11 ; 44) monté à translation suivant l'axe longitudinal du châssis (2 ; 41) et ayant un côté avant et un côté arrière se trouvant côté respectivement avant et arrière du châssis (2 ; 41), au moins un élément de guidage en translation (18 ; 45) du chariot (11 ; 44) et une structure de support de chargement (12 ; 43) reliée au chariot (11 ; 44) et ayant une région d'extrémité côté avant du véhicule et une région d'extrémité côté arrière du véhicule, le chariot (11 ; 44) étant déplaçable entre une première position, dite de transport, dans laquelle la structure de support de chargement (12 ; 43) est portée par le châssis (2 ; 41), et une seconde position, dans laquelle la structure de support de chargement (12 ; 43) repose au sol par ses régions d'extrémité côté avant et côté arrière, le ou les éléments de guidage (18 ; 45) étant déplaçables entre une position sensiblement horizontale et au moins une position inclinée dans laquelle ils sont inclinés vers l'arrière du véhicule (1 ; 40) avec leur extrémité arrière au voisinage du sol, des moyens de commande du mouvement d'inclinaison du ou des éléments de guidage (18 ; 45) et des moyens de commande du mouvement de translation du chariot (11 ; 44) étant prévus, **caractérisé par le fait que** :
- la structure de support de chargement (12 ; 43) et le côté arrière du chariot (11 ; 44) sont reliés par au moins une articulation (32) simple comprenant d'une part un axe (33) porté par l'un du chariot (11 ; 44) et de la structure de support de chargement (12 ; 43) et, d'autre part, au moins un crochet (34) porté par l'autre du chariot (11 ; 44) et de la structure de support de chargement (12 ; 43), l'au moins un crochet (34) ayant une ouverture dans laquelle ledit axe (33) est reçu de manière amovible, l'ouverture de l'au moins un crochet (34) offrant alors une surface de butée permettant de solidariser en translation le chariot (11 ; 44) et la structure de support de chargement (12 ; 43) pour qu'un mouvement de translation du chariot (11 ; 44) entraîne un mouvement de translation de la structure de support de chargement (12 ; 43), et
- sont prévus des moyens pour, dans la région d'extrémité arrière du ou des éléments de guidage (18 ; 45), incliner le côté arrière du chariot (11 ; 44) vers le bas par rapport à l'axe longitudinal moyen du ou de chaque élément de guidage (18 ; 44), de façon à rapprocher du sol celui de l'axe (33) et de l'au moins un crochet (34) qui est porté par le chariot (11 ; 44), suffisamment pour que l'ouverture de l'au moins un crochet (34) n'offre plus de surface de butée pour solidariser en translation le chariot (11 ; 44) et la structure de support de chargement (12 ; 43) lorsque le chariot (11 ; 44) est placé dans la seconde position, dite de pose au sol.

2. Véhicule (1 ; 40) selon la revendication 1, **caractérisé par le fait que** le ou les éléments de guidage (18 ; 45) définissent la trajectoire suivie par le chariot (11 ; 44) entre la position de transport et la position de pose au sol et qu'ils sont agencés pour que dans leur région d'extrémité arrière ladite trajectoire soit inclinée vers le bas par rapport à l'axe longitudinal moyen du ou des éléments de guidage (18 ; 45), le ou les éléments de guidage (18 ; 45) formant ainsi les moyens pour incliner le chariot (11 ; 44) vers le bas.

3. Véhicule (1 ; 40) selon la revendication 2, **caractérisé par le fait que** le ou chaque élément de guidage est un rail (18 ; 45) rectiligne dont la région d'extrémité arrière forme un angle avec la partie rectiligne du rail (18 ; 45) et constitue la partie dans laquelle la trajectoire du chariot (11 ; 44) est inclinée vers le bas par rapport à l'axe longitudinal moyen du rail (18 ; 45), la partie rectiligne du rail (18 ; 45) étant parallèle audit axe longitudinal moyen.

4. Véhicule (1 ; 40) selon l'une des revendications 1 à 3, **caractérisé par le fait qu'**il comprend deux éléments de guidage (18 ; 45) parallèles l'un à l'autre et guidant chacun en translation un côté latéral respectif du chariot (11 ; 44).

5. Véhicule (1 ; 40) selon l'une des revendications 1 à 4, **caractérisé par le fait que** l'au moins un crochet (34) de la ou de chaque articulation (32) est porté par la structure de support de chargement (12 ; 43), l'ouverture de l'au moins un crochet (34) étant tournée vers le bas, et que le chariot (11 ; 44) comprend un corps muni d'une part de moyens de roulement (20) guidés en translation par le ou les éléments de guidage (18 ; 45) et, d'autre part, d'au moins une patte (31) se projetant vers l'extérieur à partir du côté arrière du chariot (11 ; 44), l'axe (33) de la ou de chaque articulation (32) reliant le chariot (11 ; 44) et la structure de support de chargement (12 ; 43) étant porté par au moins une patte (31) précitée, de telle sorte que l'axe (33) de l'articulation (32) est à une distance du corps du chariot (11 ; 44) suffisante pour que dans la position de pose au sol l'axe (33) soit au voisinage du sol et que la région d'extrémité côté avant de la structure de support de chargement (12 ; 43) repose au sol.

6. Véhicule (1) selon la revendication 5, **caractérisé par le fait que** le corps du chariot (11) est muni de deux pattes (31) en regard l'une de l'autre et entre lesquelles est monté l'axe (33) de l'articulation (32).

7. Véhicule (1 ; 40) selon l'une des revendications 1 à 4, **caractérisé par le fait que** l'axe de la ou de chaque articulation est porté par la structure de support de chargement et que le chariot comprend un corps muni d'une part de moyens de roulement guidés en translation par le ou les éléments de guidage (18) et, d'autre part, de l'au moins un crochet de la ou de chaque articulation, l'ouverture de l'au moins un crochet étant tournée vers le haut et située à une distance du corps du chariot suffisante pour que dans la position de pose au sol l'ouverture de l'au moins un crochet soit au voisinage du sol et que la région d'extrémité côté avant de la structure de support de chargement repose au sol.

8. Véhicule (1 ; 40) selon l'une quelconque des revendications 1 à 7, **caractérisé par le fait que** l'axe de la ou de chaque articulation est un axe globalement en V, dont l'angle au sommet est, de préférence, d'environ 140°.

9. Véhicule (1) selon l'une des revendications 1 à 8, **caractérisé par le fait que** le véhicule (1) est une remorque de type basculante, le châssis (2) étant ainsi déplaçable entre une position sensiblement horizontale et au moins une position inclinée, dans laquelle il est incliné vers l'arrière du véhicule (1) avec sa région d'extrémité côté arrière du véhicule au moins au voisinage du sol, le ou les éléments de guidage (18) étant solidaires du châssis (2) de façon à être inclinés avec le châssis (2), des moyens de commande du mouvement d'inclinaison du châssis (2) étant prévus, lesquels moyens de commande constituant les moyens de commande du mouvement d'inclinaison du ou des éléments de guidage (18).

10. Véhicule (1) selon l'une des revendications 1 à 8, **caractérisé par le fait que** le véhicule (1) est du type à châssis non basculant et comprend un faux-châssis monté sur le châssis à translation et de manière inclinable de façon à pouvoir être déplacé entre une position, correspondant à ladite position de transport, dans laquelle il repose sur le châssis et au moins une position inclinée dans laquelle il est incliné vers l'arrière du véhicule, le ou les éléments de guidage étant formés par le faux-châssis ou solidaires du faux-châssis de façon à être inclinés avec le faux-châssis, des moyens de commande des mouvements de translation et d'inclinaison du faux-châssis étant prévus, lesquels moyens de commande constituant les moyens de commande du mouvement d'inclinaison du ou des éléments de guidage.

## Patentansprüche

1. Straßentransportfahrzeug (1 ; 40) mit einem Fahrgestell (2 ; 41) mit einer Längsachse, einem Fahrwerk (11 ; 44), das gemäß der Längsachse des Fahrgestells (2 ; 41) in Translation gelagert ist und eine Vorderseite und eine hintere Seite umfasst, die sich vor bzw. hinter dem Fahrgestell (2 ; 41) befinden, mindestens einem Führungselement in Translation (18 ; 45) für das Fahrwerk (11 ; 44) und einer Haltestruktur zum Beladen (12 ; 43), die mit dem Fahrwerk (11 ; 44) verbunden ist und einen Endbereich an der Vorderseite des Fahrzeugs und einen Endbereich an der hinteren Seite des Fahrzeugs umfasst, wobei das Fahrwerk (11 ; 44) zwischen einer ersten Position, genannt Transportposition, in der die Haltestruktur zum Beladen (12 ; 43) von dem Fahrgestell (2 ; 41) getragen wird, und einer zweiten Position verschiebbar ist, in der die Haltestruktur zum Beladen (12 ; 43) auf dem Erdboden liegt, mittels seiner Endbereiche an der Vorderseite und an der hinteren Seite, wobei das oder die Führungselement (e) (18 ; 45) zwischen einer im wesentlichen waagrechten Position und mindestens einer geneigten Position verschiebbar sind, in der sie zum hinteren Teil des Fahrzeugs (1 ; 40) hin geneigt sind und ihr Hinterende in der Nähe des Erdbodens liegt, wobei Mittel zur Steuerung der Neigungsbewegung des Führungselements oder der Führungselemente (18 ; 45) und Mittel zur Steuerung der Translationsbewegung des Fahrwerks (11 ; 44) vorgesehen sind, **gekennzeichnet dadurch, dass**:
- die Haltestruktur zum Beladen (12 ; 43) und die hintere Seite des Fahrwerks (11 ; 44) sind durch mindestens ein einfaches Gelenk (32) verbunden, das einerseits eine Achse (33) umfasst, die von dem Fahrwerk (11 ; 44) oder der Haltestruktur zum Beladen (12 ; 43) getragen wird, und andererseits mindestens einen Haken (34), der von dem verbleibenden getragen wird, also dem Fahrwerk (11 ; 44) oder der Haltestruktur zum Beladen (12 ; 43), wobei der mindestens eine Haken (34) eine Öffnung hat, in der die Achse (33) lösbar aufgenommen ist, so dass die Öffnung des mindestens einen Hakens (34) dann eine Anschlagfläche bietet, zur Verbindung in Translation des Fahrwerks (11 ; 44) mit der Haltestruktur zum Beladen (12 ; 43), damit eine Translationsbewegung des Fahrwerks (11 ; 44) eine Translationsbewegung der Haltestruktur zum Beladen (12 ; 43) auslöst, und
- Mittel vorgesehen sind, um, in dem hinteren Endbereich des Führungselements oder der Führungselemente (18 ; 45), die hintere Seite des Fahrwerks (11 ; 44) nach unten im Verhältnis zur mittleren Längsachse des oder jedes Führungselements (18 ; 44) zu neigen, um die der Achse (33) und des mindestens einen Hakens (34), der vom Fahrwerk (11 ; 44) getragen wird, dem Erdboden genügend anzunähern, damit die Öffnung des mindestens einen Hakens (34) keine Anschlagfläche mehr bietet, um das Fahrwerk (11 ; 44) und die Haltestruktur zum Beladen (12 ; 43) in Translation zu verbinden, wenn das Fahrwerk (11 ; 44) in der zweiten Position platziert ist, die Position der Verlegung auf den Erdboden genannt wird.

2. Fahrzeug (1 ; 40) nach Anspruch 1, **gekennzeichnet dadurch, dass** das oder die Führungselement(e) (18 ; 45) den Streckenverlauf des Fahrwerks (11 ; 44) zwischen der Transportposition und der Position der Verlegung auf den Erdboden definieren, und dass sie derart angeordnet sind, dass in ihrem hinteren Endbereich der Streckenverlauf nach unten geneigt ist im Verhältnis zur mittleren Längsachse des Führungselements oder der Führungselemente (18 ; 45), das oder die Führungselement(e) (18 ; 45) bilden daher die Mittel, um das Fahrwerk (11 ; 44) nach unten zu neigen.

3. Fahrzeug (1 ; 40) nach Anspruch 2, **gekennzeichnet dadurch, dass** das oder jedes Führungselement eine geradlinige Schiene (18 ; 45) ist, dessen hinterer Endbereich einen Winkel mit dem geradlinigen Teil der Schiene (18 ; 45) bildet und den Teil darstellt, in dem der Streckenverlauf des Fahrwerks (11 ; 44) nach unten im Verhältnis zur mittleren Längsachse der Schiene (18 ; 45) geneigt ist, wobei der geradlinige Teil der Schiene (18 ; 45) parallel zur genannten mittleren Längsachse ist.

4. Fahrzeug (1 ; 40) nach einem der Ansprüche 1 bis 3, **gekennzeichnet dadurch, dass** es zwei Führungselemente (18 ; 45) parallel zueinander umfasst und dass jedes eine jeweilige Seite des Fahrwerks (11 ; 44) in Translation führt.

5. Fahrzeug (1 ; 40) nach einem der Ansprüche 1 bis 4, **gekennzeichnet dadurch, dass** der mindestens eine Haken (34) des oder jedes Gelenks (32) von der Haltestruktur zum Beladen (12 ; 43) getragen wird, wobei die Öffnung des mindestens einen Hakens (34) nach unten gewandt ist, und dass das Fahrwerk (11 ; 44) einen Körper umfasst, der einerseits mit Rollmitteln (20) ausgestattet ist, die von dem oder den Führungselement (en) (18 ; 45) in Translation geführt werden, und andererseits mit mindestens einer Lasche (31), die nach außen ragt, ausgehend von der hinteren Seite des Fahrwerks (11 ; 44), die Achse (33) des oder jedes Gelenks (32), das das Fahrwerk (11 ; 44) und die Haltestruktur zum Beladen (12 ; 43) verbindet, wird von mindestens einer vorgenannten Lasche (31) getragen, so dass die Achse (33) des Gelenks (32) sich in einem genügenden Abstand vom Körper des Fahrwerks (11 ; 44) befindet, damit in der Position der Verlegung auf den Erdboden die Achse (33) in der Nähe des Erdbodens liegt und der vordere Endbereich der Haltestruktur zum Beladen (12 ; 43) auf dem Erdboden liegt.

6. Fahrzeug (1) nach Anspruch 5, **gekennzeichnet dadurch, dass** der Körper des Fahrwerks (11) mit zwei Laschen (31) ausgestattet ist, die einander gegenüberliegen und zwischen die die Achse (33) des Gelenks (32) montiert ist.

7. Fahrzeug (1 ; 40) nach einem der Ansprüche 1 bis 4, **gekennzeichnet dadurch, dass** die Achse des oder jedes Gelenks von der Haltestruktur zum Beladen getragen wird und dass das Fahrwerk einen Körper umfasst, der einerseits mit Rollmitteln ausgestattet ist, die in Translation von dem oder den Führungselement(en) (18) geführt werden, und andererseits von dem mindestens einen Haken des oder jedes Gelenks, die Öffnung des mindestens einen Haken ist nach oben gewandt und in einem genügenden Abstand vom Körper des Fahrwerks, damit in der Position der Verlegung auf den Erdboden die Öffnung des mindestens einen Hakens sich in der Nähe des Erdbodens befindet und der vordere Endbereich der Haltestruktur zum Beladen auf dem Erdboden liegt.

8. Fahrzeug (1 ; 40) nach einem beliebigen der Ansprüche 1 bis 7, **gekennzeichnet dadurch, dass** die Achse des oder jedes Gelenks eine im Ganzen V-förmige Achse ist, deren Scheitelwinkel vorzugsweise etwa 140° beträgt.

9. Fahrzeug (1) nach einem der Ansprüche 1 bis 8, **gekennzeichnet dadurch, dass** das Fahrzeug (1) ein kippbarer Anhänger ist, so dass das Fahrgestell (2) zwischen einer im wesentlichen waagrechten Position und mindestens einer geneigten Position verschiebbar ist, in der es zum hinteren Teil des Fahrzeugs (1) hin geneigt ist, wobei sein Endbereich an der hinteren Seite des Fahrzeugs mindestens in der Nähe des Erdbodens liegt, das oder die Führungselement(e) (18) sind mit dem Fahrgestell (2) verbunden, um mit dem Fahrgestell (2) geneigt zu werden, Mittel zur Steuerung der Neigungsbewegung des Fahrgestells (2) sind vorgesehen, wobei die Steuermittel die Mittel zur Steuerung der Neigungsbewegung des Führungselements oder der Führungselemente (18) bilden.

10. Fahrzeug (1) nach einem der Ansprüche 1 bis 8, **gekennzeichnet dadurch, dass** das Fahrzeug (1) ein nicht kippbares Fahrgestell und einen Hilfsrahmen umfasst, der in Translation auf das Fahrgestell montiert ist, und neigbar, um zwischen einer Position, die besagter Transportposition entspricht, in der er auf dem Fahrgestell ruht, und mindestens einer geneigten Position verschoben werden zu können, in der er zum hinteren Teil des Fahrzeugs hin geneigt ist, das oder die Führungselement(e) werden von dem Hilfsrahmen gebildet oder sind damit verbunden, um mit dem Hilfsrahmen geneigt zu werden, Steuerungsmittel für die Translations- und Neigungsbewegungen des Hilfsrahmens sind vorgesehen, wobei die Steuermittel die Mittel zur Steuerung der Neigungsbewegung des Führungselements oder der Führungselemente(e) bilden.

## Claims

1. A road transport vehicle (1; 40) comprising a chassis (2 ; 41) having a longitudinal axis, a carriage (11; 44) mounted so as to be translatable along the longitudinal axis of the chassis (2; 41) and having a front side and a rear side being respectively located on the front and rear sides of the chassis (2; 41), at least one member (18; 45) for translationally guiding the carriage (11; 44), and a load supporting structure (12; 43) connected to the carriage (11; 44) and having an vehicle front-side end region and a vehicle rear-side end region, the carriage (11; 44) being movable between a first, so-called transport position, in which the load supporting structure (12; 43) is carried by the chassis (2; 41), and a second position, in which the load supporting structure (12; 43) rests on the ground by its front-side and rear-side end regions, the one or more guiding members (18; 45) being movable between a substantially horizontal position and at least one tilted position in which it is tilted towards the back of the vehicle (1; 40) with its rear end in the vicinity of the ground, means for controlling the tilting motion of the one ore more guiding members (18; 45) and means for controlling the translational motion of the carriage (11; 44) being provided, **characterised by** the fact that:
- the load supporting structure (12; 43) and the rear side of the carriage (11; 44) are connected by at least one rotary joint (32) comprising, on one hand, a pivot pin (33) carried by one of the carriage (11; 44) and the load supporting structure (12; 43), and, on the other hand, at least one hook (34) carried by the other of the carriage (11; 44) and the load supporting structure (12; 43), the at least one hook (34) having an opening in which said pivot pin (33) is removably accommodated, the opening of the at least one hook (34) thus providing an abutment surface allowing to make the carriage (11; 44) and the load supporting structure (12; 43) translationally integral with each other so that a translational motion of the carriage (11; 44) causes a translational motion of the load supporting structure (12; 43), and
- means are provided, in the rear end region of the one or more guiding members (18; 45), for tilting the rear side of the carriage (11; 44) downwards with respect to the mean longitudinal axis of the or each guiding member (18; 44), so as to bring closer to the ground the one of the pivot pin (33) and the at least one hook (34) that is carried by the carriage (11; 44), sufficiently so that the opening of the at least one hook (34) does not provide any longer an abutment surface to make the carriage (11; 44) and the load supporting structure (12; 43) translationally integral with each other when the carriage (11; 44) is placed in the second, so-called ground laying position.

2. The vehicle (1; 40) according to claim 1, **characterised by** the fact that the one or more guiding members (18; 45) define the trajectory followed by the carriage (11; 44) between the transport position and the ground laying position and by the fact that they are arranged so that, in their rear end region, said trajectory is tilted downwards with respect to the mean longitudinal axis of the one or more guiding members (18; 45), the one or more guiding members (18; 45) thus forming the means for tilting the carriage (11; 44) downwards.

3. The vehicle (1; 40) according to claim 2, **characterised by** the fact that the or each guiding member is a rectilinear rail (18; 45) the rear end region of which forms an angle with the rectilinear part of the rail (18; 45) and constitutes the part in which the trajectory of the carriage (11; 44) is tilted downwards with respect to the mean longitudinal axis of the rail (18; 45), the rectilinear part of the rail (18; 45) being parallel to said mean longitudinal axis.

4. The vehicle (1; 40) according to one of claims 1 to 3, **characterised by** the fact that it comprises two guiding members (18; 45) which are parallel to each other and each translationally guiding a respective lateral side of the carriage (11; 44).

5. The vehicle (1; 40) according to one of claims 1 to 4, **characterised by** the fact that the at least one hook (34) of the or each rotary joint (32) is carried by the load supporting structure (12; 43), the opening of the at least one hook (34) facing downwards, and by the fact that the carriage (11; 44) comprises a body provided, on the one hand, with rolling means (20) translationally guided by the one or more guiding members (18; 45) and, on the other hand, with at least one lug (31) projecting outwardly from the rear side of the carriage (11; 44), the pivot pin (33) of the or each rotary joint (32) connecting the carriage (11; 44) and the load supporting structure (12; 43) being carried by at least one aforementioned lug (31), such that the pivot pin (33) of the rotary joint (32) is at a distance from the body of the carriage (11; 44) that is sufficient so that, in the ground laying position, the pivot pin (33) is in the vicinity of the ground and that the front-side end region of the load supporting structure (12; 43) rests on the ground.

6. The vehicle (1) according to claim 5, **characterised by** the fact that the body of the carriage (11) is provided with two lugs (31) facing each other and between which the pivot pin (33) of the rotary joint (32) is mounted.

7. The vehicle (1; 40) according to one of claims 1 to 4, **characterised by** the fact that the pivot pin of the or each rotary joint is carried by the load supporting structure and by the fact that the carriage comprises a body provided, on the one hand, with rolling means translationally guided by the one or more guiding members (18) and, on the other hand, with the at least one hook of the or each rotary joint, the opening of the at least one hook facing upwardly and being located at a distance from the body of the carriage which is sufficient so that, in the ground laying position, the opening of the at least one hook is in the vicinity of the ground and that the front-side end region of the load supporting structure rests on the ground.

8. The vehicle (1; 40) according to any one of claims 1 to 7, **characterised in that** the pivot pin of the or each rotary joint is a generally V-shaped pivot pin, the vertex angle of which is, preferably, about 140°.

9. The vehicle (1) according to one of claims 1 to 8, **characterised by** the fact that the vehicle (1) is a tipping-type trailer, the chassis (2) thus being movable between a substantially horizontal position and at least one tilted position, in which it is tilted towards the back of the vehicle (1) with its rear-side end region at least in the vicinity of the ground, the one or more guiding members (18) being integral with the chassis (2) in order to be tilted with the chassis (2), means for controlling the tilting motion of the chassis (2) being provided, which controlling means constitutes the means for controlling the tilting motion of the one or more guiding members (18).

10. The vehicle (1) according to one of claims 1 to 8, **characterised in that** the vehicle (1) is a non-tilting chassis type vehicle and comprises an underframe which is mounted on the chassis so as to be translatable and tiltable in order to be able to be moved between a position, corresponding to said transport position, in which it rests on the chassis, and at least one tilted position, in which it is tilted towards the back of the vehicle, the one or more guiding members being formed by the underframe or being integral with the underframe in order to be tilted with the underframe, means for controlling the translational and tilting motions of the underframe being provided, which controlling means constitutes the means for controlling the tilting motion of the one or more guiding members.
